(19) Europäisches Patentamt / European Patent Office / Office européen des brevets

(11) **EP 2 776 257 B1**

(12) **EUROPÄISCHE PATENTSCHRIFT**

(45) Veröffentlichungstag und Bekanntmachung des Hinweises auf die Patenterteilung:
**20.03.2019   Patentblatt 2019/12**

(21) Anmeldenummer: **12753909.6**

(22) Anmeldetag: **25.08.2012**

(51) Int Cl.:
**B60C 23/06** *(2006.01)*    **B60C 23/04** *(2006.01)*

(86) Internationale Anmeldenummer:
**PCT/EP2012/003593**

(87) Internationale Veröffentlichungsnummer:
**WO 2013/068059 (16.05.2013 Gazette 2013/20)**

(54) **VERFAHREN ZUR ÜBERPRÜFUNG VON FAHRZEUG-REIFEN UND STEUEREINRICHTUNG ZUR DURCHFÜHRUNG DES VERFAHRENS**

METHOD FOR CHECKING VEHICLE TYRES AND CONTROL UNIT FOR CARRYING OUT THE METHOD

PROCÉDÉ DE VÉRIFICATION DE PNEUS DE VÉHICULE ET DISPOSITIF DE COMMANDE POUR LA RÉALISATION DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2011   DE 102011118436**

(43) Veröffentlichungstag der Anmeldung:
**17.09.2014   Patentblatt 2014/38**

(73) Patentinhaber: **WABCO GmbH**
**30453 Hannover (DE)**

(72) Erfinder:
• **GORCZYCA, Sven**
**30173 Hannover (DE)**
• **RISSE, Rainer**
**30982 Pattensen-Reden (DE)**
• **STENDER, Axel**
**31787 Hameln (DE)**

(74) Vertreter: **Lauerwald, Jörg**
**Wabco GmbH**
**Am Lindener Hafen 21**
**30453 Hannover (DE)**

(56) Entgegenhaltungen:
**EP-A1- 1 475 250        GB-A- 2 326 007**
**US-A1- 2010 180 677**

**Beschreibung**

Die Erfindung betrifft ein Verfahren zur Überprüfung von Fahrzeug- Reifen und eine Steuereinrichtung zur Durchführung des Verfahrens, sowie ein Fahrzeug-Regelsystem mit der Steuereinrichtung.

Es sind bereits verschiedene Verfahren zur Überwachung von Fahrzeug-Reifen bekannt, insbesondere zur Überprüfung des Reifenfülldrucks (Reifenluftdrucks), zum Teil auch der Reifentemperatur und zur Überprüfung des Reifenverschleißes durch Verschleißsensoren. Bei Fahrzeugen ohne derartige Sensoren sind Überprüfungen im Allgemeinen schwierig.

GB 2 326 007 A offenbart ein Reifen-Diagnosesystem zum Ermitteln eines Reifendruckzustandes eines Luftreifens an einem Kraftfahrzeug mit einem Sensor, der mit jedem Rad zusammen wirkt, um einen streckenbezogenen Parameter jedes Rades abzufragen, und einen Global Positioning Empfänger, der Positionssignale von einem Global Positioning System empfängt. Basierend auf den vom Global Positioning Empfänger empfangenen Positionssignalen wird ein streckenbezogener Parameter des Fahrzeuges berechnet, so dass ein gewünschter streckenbezogener Parameter eines Rades mit einem vorgegebenen aufgepumpten Luftreifen berechnet werden kann. Das System vergleicht dann jeden abgefragten streckenbezogenen Parameter jedes Rades mit dem gewünschten streckenbezogenen Parameter, um zu bestimmen, ob jeder Reifen richtig aufgepumpt ist.

US 2010/01 80 677 A1 offenbart ein Fahrzeug mit einem Reifenkontrollsystem, gemäß dem Oberbegriff des Anspruchs 10, wobei anhand der Informationen des Reifenkontrollsystems die Beladung des Fahrzeugs ermittelt wird.

Die Reifeneigenschaften können auch in Langzeitüberprüfungen überwacht werden. Hierzu ist dann ein Reifenwechsel zu vermerken bzw. die Überwachung wieder auf einen Anfangswert zu setzen. Ein derartiger Reifenwechsel wird jedoch zum Teil nicht vermerkt, so dass Fehlbewertungen auftreten können.

Weiterhin ist ein missbräuchlicher Reifenwechsel möglich; so werden insbesondere bei Vermietgesellschaften Reifen von gemieteten Fahrzeugen manchmal gegen verschlissene Reifen ausgetauscht und das Fahrzeug dann wieder zurück gegeben. Ein derartiger Missbrauch ist nur schwer nachzuweisen.

Der Erfindung liegt die Aufgabe zugrunde, ein Verfahren zur Überwachung von Fahrzeugreifen und eine Steuereinrichtung zur Durchführung eines derartigen Verfahrens zu schaffen, die mit relativ geringem Aufwand eine Überprüfung der Fahrzeugreifen ermöglichen.

Diese Aufgabe wird durch ein Verfahren nach Anspruch 1 und eine Steuereinrichtung nach Anspruch 10 gelöst. Die Unteransprüche beschreiben bevorzugte Weiterbildungen.

Erfindungsgemäß wird somit zu mindestens einem Rad, vorzugsweise mehreren oder allen Rädern, eine in einer Zeitdauer zurückgelegte individuelle Radwegstrecke ermittelt und mit einer in der Zeitdauer zurückgelegten Referenz-Wegstrecke direkt oder indirekt verglichen.

Der Erfindung liegt der Gedanke zugrunde, dass durch ABS und/oder andere Regelsysteme im allgemeinen Radsensoren zur Ermittlung einer Raddrehzahl vorhanden sind, deren Signale entsprechend zeitlich integriert oder summiert werden können. Die in einer Zeitdauer zurückgelegten individuellen Wegstrecken der einzelnen Räder ergeben sich dann z. B. aus dem Radius der einzelnen Räder und der Anzahl ihrer Gesamt-Drehungen.

Ein Wechsel eines Reifens, insbesondere ein Wechsel eines neuen Reifens gegen einen verschlissenen Reifen oder umgekehrt, führt zu einer deutlichen Änderung des Reifenradius.

Durch einen Vergleich mit einem Referenzwert über die in der selben Zeitdauer zurück gelegten Wegstrecke des Fahrzeugs kann eine hinreichend deutliche Änderung des Radius des Reifens somit erkannt werden. Hierzu kann aus den Radsensor-Signalen über die Zeitdauer, z. B. durch zeitliche Integration, eine Vergleichsgröße zur Angabe einer Rad-Wegstrecke des Rades ermittelt werden, und die Referenz-Wegstrecke über dieselbe Zeitdauer unabhängig von den Radsensor-Signalen ermittelt werden, so dass dann aus der Rad-Wegstrecke und der Referenz- Wegstrecke ein individueller Verhältniswert des Rades gebildet wird, der sich z. B. verschleißbedingt nur langsam ändern sollte.

Wenn z. B. nach Abstellen oder Stillstand des Fahrzeugs eine deutliche Änderung dieses Verhältniswertes ermittelt wird, kann auf einen Reifenwechsel erkannt werden oder zumindest ein Warnsignal ausgegeben werden, dass einen möglichen Reifenwechsel anzeigt.

Zur Ermittlung der Referenz-Wegstrecke kann insbesondere ein Globales Positionsbestimmungssystem (GPS) heran gezogen werden. Hierzu kann direkt eine von der GPS-Einrichtung des Fahrzeugs ermittelte GPS- Geschwindigkeit herangezogen und zeitlich integriert werden, oder aus GPS-Positionen zu verschiedenen Zeitpunkten die Referenz-Wegstrecke durch Summation / Integration ermittelt werden.

Zwar wird die individuelle Rad-Wegstrecke durch z. B. Kurvenfahrt oder zeitweisem Schlupf von der Referenz-Wegstrecke jeweils aktuell etwas abweichen können, so dass ein reiner Vergleich z. B. der GPS-Geschwindigkeit mit der Radgeschwindigkeit nicht immer aussagekräftige Werte liefern wird; erfindungsgemäß wird jedoch erkannt, dass bei einer hinreichend großen Wegstrecke von z. B. 10 km sich durch z. B. Kurvenfahrt bedingte Variationen ausgleichen, da im Mittel gleich viele Kurven nach links und rechts gefahren werden und somit die einzelnen Räder im Mittel die Fahrzeug-Wegstrecke zurück legen.

Grundsätzlich ist die Ausbildung eines Verhältniswertes aus einer aus den Radsensor-Signalen gebildeten Vergleichsgröße und der Referenz-Wegstrecke ausreichend; es sind nicht unbedingt genaue individuelle Rad-Wegstrecken zu ermitteln, zu deren Ermittlung zunächst der Umfang aus dem Produkt aus 2*PI*Radius anzusetzen ist.

Die Referenz-Wegstrecke kann statt aus dem GPS auch aus anderen Signalen ermittelt werden. Grundsätzlich ist auch ein relativer Vergleich der einzelnen Rad-Wegstrecken bzw. der sie charakterisierenden Vergleichsgrößen miteinander möglich; bei Wechsel von z. B. allen Reifen kann dies jedoch gegebenenfalls nicht ausreichend sein. Somit ist ein derartiger relativer Vergleich insbesondere als zusätzliche Maßnahme, d.h. zusätzlich zu der Ermittlung der Referenz-Wegstrecke sinnvoll.

Das erfindungsgemäße Verfahren ermöglicht somit mit relativ geringem Aufwand, insbesondere ohne zusätzliche Hardware wie ergänzende Sensoren oder Markierungen an den Rädern, eine Überprüfung auf einen Reifenwechsel und/oder eine deutliche Änderung im Radradius, z. B. bei einem Leck im Reifen.

Die Erfindung betrifft weiterhin eine Steuereinrichtung zur Durchführung des Verfahrens, wobei hierfür insbesondere die in dem Fahrzeug-Regelsystem ohnehin vorhandene Steuereinrichtung heran gezogen werden kann, die somit lediglich die Referenz-Wegstrecke zu ermitteln hat, z. B. durch Aufnahme von Signalen des GPS und/oder von Drehzahlen des Antriebsstrangs des Fahrzeugs, oder bei einem Anhängerfahrzeug auch von Signalen des Zugfahrzeugs.

Die Erfindung wird im Folgenden anhand der beiliegenden Zeichnungen an einigen Ausführungsformen näher erläutert. Es zeigen:

Fig. 1      ein erfindungsgemäßes Fahrzeug in Aufsicht;

Fig. 2      ein erfindungsgemäßes Fahrzeug in Seitenansicht;

Fig. 3      ein Flussdiagramm eines erfindungsgemäßen Verfahrens;

Fig. 4      ein Zeitdiagramm eines erfindungsgemäßen Verfahrens.

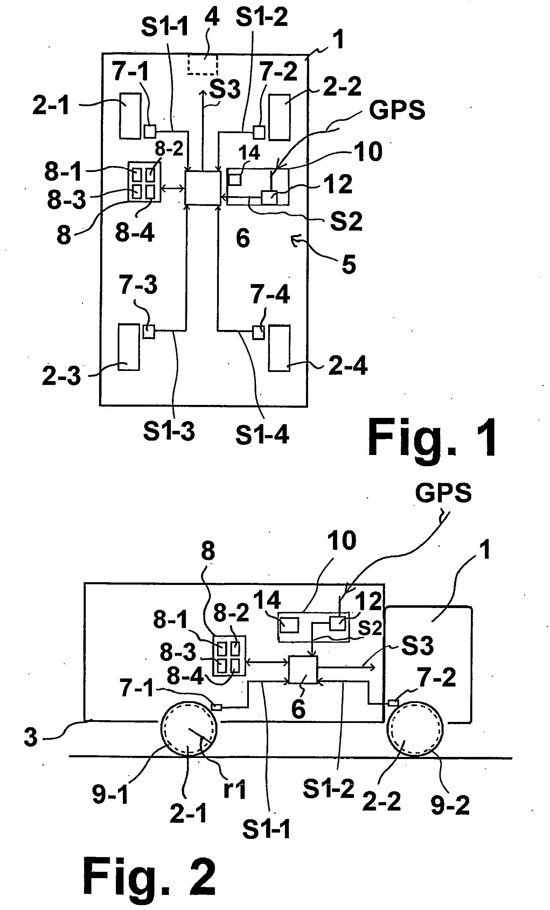

Ein Fahrzeug 1 kann z. B. ein Anhängerfahrzeug oder ein selbst angetriebenes Fahrzeug sein; es weist vier Räder 2-1, 2-2, 2-3 und 2-4 und ein Fahrzeuggestell (Fahrzeugrahmen) 3 auf. In Fig. 1 ist das Fahrzeug als Anhängerfahrzeug mit Anhängerschnittstelle 4 dargestellt, die auch als Datenschnittstelle zu einem Zugfahrzeug dient, in Fig. 2 hingegen als Zugfahrzeug.

Das Fahrzeug 1 weist weiterhin ein Brems-Regelsystem 5 auf, das unter anderem eine Steuereinrichtung 6, Raddrehzahlsensoren 7-1, 7-2, 7-3, 7-4 zur Messung der Raddrehzahlen der Räder 2-1, 2-2, 2-3, 2-4, eine Speichereinrichtung 8 und gegebenenfalls weitere hier nicht gezeigte Komponenten aufweist. Das Brems-Regelsystem 5 kann z. B. auch ein Fahrdynamik-Regelsystem sein; es kann z. B. ein ABS-, EBS- (elektronisches Bremssystem), FDR- (Fahrdynamik-Regelung), ASR-Regelsystem oder eine Kombination derartiger Regelsysteme sein. Für die Erfindung relevant sind insbesondere die Radsensoren 7-1 bis 7-4 (ABS-Sensoren, Raddrehzahl-Sensoren).

Das Anhängerfahrzeug 1 weist weiterhin ein Navigationssystem 10 mit einem GPS-Empfänger 12 zum Empfangen von Signalen GPS eines globalen Positionsbestimmungs-Systems (GPS), das insbesondere satellitengestützt, oder auch terrestrisch oder kombiniert sein kann, und ggf. einen Kartenspeicher 14 auf. Das Navigationssystem 10 kann in der Steuereinrichtung 6 integriert sein.

Die Steuereinrichtung 6, oder gegebenenfalls eine weitere, mit der Steuereinrichtung 6 verbundene Steuereinrichtung führt zusätzlich zu den Bremsregelund/oder Fahrdynamik-Regeleingriffen ein Verfahren zur Überprüfung der Räder 2-1 bis 2-4 durch. Hierzu nimmt die Steuereinrichtung 6 von den Radsensoren 7-1 bis 7-4 Radsensorsignale S1-1, S1-2, S1-3 und S1-4 auf, die am Fahrgestell (Fahrwerk) 3 vorgesehen sind und Raddrehungen gegenüber einem am jeweiligen Rad vorgesehenen Polrad detektieren. Die Radsensorsignale S1-1, S1-2, S1-3 und S1-4 können Daten über die Raddrehungen oder als zeitliche Ableitung über die Raddrehzahlen n1, n2, n3, n4 enthalten.

Aus den Radsensorsignale S1-1, S1-2, S1-3 und S1-4 errechnet die Steuereinrichtung 6 jeweils zurückgelegte Rad-Wegstrecken x1, x2, x3, x4 der einzelnen Räder 2-1 bis 2-4 von einem Anfangs-Zeitpunkt t0, oder zumindest Vergleichsgrößen y1, y2, y3, y4 für diese Rad-Wegstrecken x1, x2, x3, x4. Grundsätzlich ist eine genaue Berechnung der Wegstrecken x1, x2, x3, x4 nicht erforderlich, da später ohnehin Verhältniswerte gebildet werden.

Die Steuereinrichtung 6 speichert die Rad-Wegstrecken x1, x2, x3, x4 oder Vergleichsgrößen y1, y2, y3, y4 in der Speichereinrichtung 8 ab, z. B. wie angezeigt in separaten Registern (Speicher-Untereinheiten) 8-1 bis 8-4.

Die zurückgelegten individuellen Rad-Wegstrecken x1 bis x4 oder Vergleichsgrößen y1, y2, y3, y4 können direkt durch zeitliche Integration von übermittelten Impulssignalen oder aus einer zeitlichen Integration der Raddrehzahlen n1 bis n4 ermittelt werden.

Die individuellen Rad- Wegstrecken x1, x2, x3, x4 lassen sich jeweils als Produkt der Reifenumfänge mit den Gesamt-Raddrehungen bzw. der zeitlichen Integration der Raddrehzahl darstellen, d.h.

$$xi = 2\pi {}^*ri^* \int ni^*dt,$$

mit ri dem Reifenradius des Reifens 9-i des Rades 2-i, ni der jeweiligen Drehzahl (Dimension 1/sec) und xi der Rad- Wegstrecken, für i= 1 bis 4.

Die Vergleichsgröße yi kann als $\int ni^*dt$ gebildet

werden und gibt somit die Anzahl der Raddrehungen wieder.

Die zeitliche Integration beginnt von einem Anfangs-Wert t0, der als Bezugswert dient, z. B. bei Beginn der Fahrt oder Einschalten des Fahrzeugs 1 oder der Steuereinrichtung 6, bis zu einem Zeitpunkt t1, wobei hier z. B. eine Mindeststrecke von z. B. 10 km vorgegeben werden kann.

Weiterhin ermittelt die Steuereinrichtung 6 in der Zeitdauer von t0 bis t1 eine Referenz-Wegstrecke RS des Fahrzeugs 1, die sie zum Vergleich mit den einzelnen Rädern 2-1 bis 2-4 heranzieht.

Die Referenz-Wegstrecke RS kann gemäß einer Ausführungsform mittels Signalen S2 des Navigationssystems 10, d.h. mit dem GPS-Empfänger 12 ermittelt werden. die Signale.

Die Steuereinrichtung 6 kann von dem Navigationssystem 10 direkt Geschwindigkeitssignale aufnehmen und zeitlich integrieren. Weiterhin kann die Steuereinrichtung 6 auch einzelne Positionen P(t) des Fahrzeugs 1 aufnehmen und die Referenz-Wegstrecke RS Summe der Abstände der zeitlichen Folge von Positionen P(t) ermitteln. Somit wird die Referenz-Wegstrecke RS von dem Anfangszeitpunkt t0 zu dem Zeitpunkt t1 ermittelt.

Für einen Vergleich der Rad-Wegstrecken x1 bis x4 mit der Referenz-Wegstrecke RS sind die einzelnen Radien r1 bis r4 unbekannt. Die individuellen Radien können Fabrikat-bezogen verschieden und insbesondere auch vom Verschleiß abhängig sein.

Ein Verhältniswert Vi aus yi mit RS, z. B. Vi= yi/RS,

hängt somit von ri ab. Bei konstantem ri sollte Vi sich über hinreichend große Wegstrecken gemittelt nicht ändern bzw. bei Verschleiß allmählich größer werden, da mit kleiner werdendem ri die Raddrehzahl und somit Anzahl de Raddrehungen (die proportional yi ist) steigt. Durch Ermitteln nach einer längeren Wegstrecke werden Unterschiede zwischen den Rädern, insbesondere der linken und rechten Seite durch Kurvenfahrten, wonach in einer Kurve das kurveninnere Rad eine kürzere Wegstrecke zurücklegt als das kurvenäußere Rad, ganz oder weitgehend ausgeglichen. Die abgespeicherten Verhältniswerte Vi sollten somit konstant sein bzw. sich langfristig entsprechend dem Reifenverschleiß (Verkleinerung des Radius) ändern.

Somit kann die Steuereinrichtung 6 in den Speichern 8-1 bis 8-4 jeweils direkt die Verhältniswerte Vi speichern; sie können nach Erreichen der Mindest-Wegstrecke fortlaufend aktualisiert werden.

Wird das Fahrzeug 1 zu einem Zeitpunkt t1 ausgeschaltet, so speichert die Steuereinrichtung 6 zu diesem Zeitpunkt die aktuellen Verhältniswerte Vi in den Speichern 8i ab.

Zu einem nachfolgenden Zeitpunkt t2, wenn der Motor bzw. die Zündung des Fahrzeugs wieder eingeschaltet wird, oder das Fahrzeug wieder losfährt (was von den Radsensorsignalen S1-i erfasst wird), ermittelt die Steuereinrichtung 6 wieder entsprechende Verhältniswerte Vi. Diese neuen Verhältniswerte Vi vergleicht sie mit den abgespeicherten Verhältniswerten Vi, die vor Ausschalten des Motors bzw. bei Beendigung der letzten Fahrt ermittelt wurden. Die Änderung wird mit einer Schwelle SW wie +/- 5 % oder +/- 10 % verglichen, insbesondere auf eine Verkleinerung des Radius ri hin.

Falls das Verhältnis Vi= yi/RS deutlich größer als der vorgespeicherte Verhältniswert Zi ist, d.h. der Radius ri deutlich kleiner geworden ist, ein Anzeigesignal S4 ausgegeben werden, insbesondere als Warnsignals, dass z. B. auch über die Anhängerschnittstelle 4 an das Zugfahrzeug ausgegeben werden kann.

Ergänzend können ggf. vorhandene Reifendruck-Sensoren herangezogen werden, um Änderungen des Luftdrucks des Reifens, die ebenfalls zu einer Änderung des Radius führen können, zu berücksichtigen. So kann insbesondere erkannt werden, falls z. B. Luftdruck nachgefüllt wurde, was wiederum zu einer Vergrößerung des Radius führt; weiterhin kann der Luftdruck sich auch in Abhängigkeit der Reifentemperatur ändern, was somit ebenfalls detektiert wird.

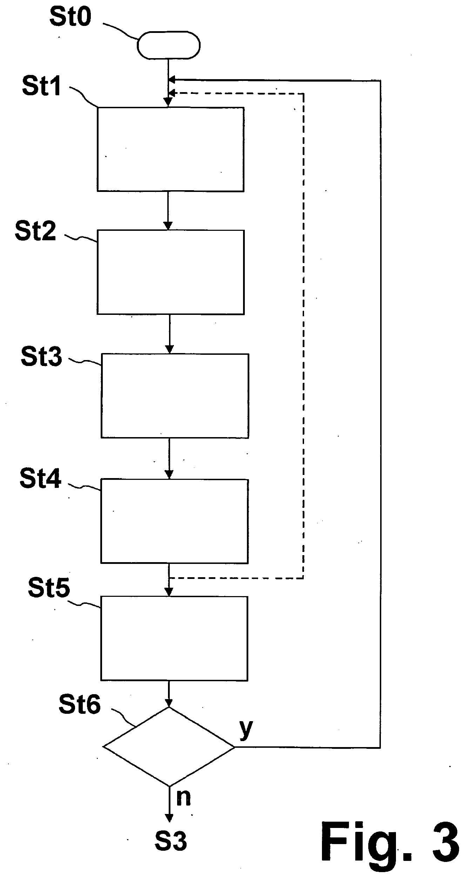

Gemäß dem erfindungsgemäßen Verfahren der Fig. 3 wird somit das Verfahren in Schritt St0 gestartet, z. B. bei Ermitteln einer Fahrt oder bei Starten des Motors und der Steuereinrichtung 6 oder auch bei Empfangen von Signalen des Zugfahrzeugs über die Anhängerschnittstelle 4. Nachfolgend werden gemäß Schritt St1 fortlaufend die Radsensorsignale S1-i der Radsensoren 7i aufgenommen und hieraus in Schritt St2 die Vergleichsgrößen yi gebildet und gespeichert.

Gemäß Schritt St3 werden GPS-Signale GPS empfangen und hieraus die Referenz-Wegstrecke RS(t) ermittelt und temporär abgespeichert. Die Schritte St2 und St3 laufen somit parallel ab.

In Schritt St4 werden nach einer hinreichenden Wegstrecke von z. B. 10 km Verhältniswerte Vi gebildet und abgespeichert und vorzugsweise fortlaufend aktualisiert, so dass sie bei Beendigung der Fahrt, d. h. beim Ausschalten der Steuereinrichtung 6 oder Stillstand des Fahrzeugs 1, gespeichert sind. Somit laufen die Schritte St1 bis St4 fortlaufend ab.

In Schritt St5 werden bei einer neuen Fahrt wiederum Verhältniswerte Vi gebildet und in Schritt St6 mit den vorgespeicherten Verhältniswerten Vi daraufhin verglichen, ob Abweichungen innerhalb der Schwelle SW liegen und in Abhängigkeit hiervon gegebenenfalls gemäß Verzweigung n ein Warnsignal S3 ausgegeben, oder gemäß Verzweigung y das Verfahren vor Schritt St1 zurückgesetzt.

**Patentansprüche**

1. Verfahren zur Überprüfung von Fahrzeug-Reifen, bei dem Radsensor-Signale (S1-1, S1-2, S1-3, S1-4) mindestens eines Rades (2-1, 2-2, 2-3, 2-4) des Fahrzeugs (1) über eine Zeitdauer (t1) aufgenommen werden (St1) und hieraus eine Vergleichsgröße (y1, y2, y3, y4) zur Angabe einer Rad-Wegstrecke (x1, x2, x3, x4) des Rades ermittelt wird (St2), eine von dem Fahrzeug in der Zeitdauer (t1) zurückgelegte Referenz-Wegstrecke (RS) unabhängig von den Radsensor-Signalen (S1-1, S1-2, S1-3, S1-4) ermittelt wird (St3),

aus der Rad-Wegstrecke (x1, x2, x3, x4) und der Referenz- Wegstrecke (RS) ein individueller Verhältniswert (2-1, 2-2, 2-3, 2-4) des Rades (2-1, 2-2, 2-3, 2-4) gebildet wird (St4),

das zeitliche Verhalten des Verhältniswertes überprüft wird (St5) und aus dem zeitlichen Verhalten auf Änderungen des Reifens des Rades geschlossen wird (St6), **dadurch gekennzeichnet, dass** aus dem zeitlichen Verhalten des Verhältniswertes (2-1, 2-2, 2-3, 2-4) darauf geschlossen wird, ob ein Wechsel des Reifens vorliegt.

2. Verfahren nach Anspruch 1, **dadurch gekennzeichnet, dass** bei einer Verringerung einer individuellen Rad-Wegstrecke (x1, x2, x3, x4) eines Rades (2-1, 2-2, 2-3, 2-4) relativ zu der Referenz-Wegstrecke auf eine Verringerung des Radius des Reifens (9-1, 9-2, 9-3, 9-4) geschlossen wird.

3. Verfahren nach Anspruch 1, **dadurch gekennzeichnet, dass** auf einen Wechsel des Reifens geschlossen wird, wenn eine Änderung des Verhältniswertes (Vi) des Reifens oberhalb einer Schwelle liegt.

4. Verfahren nach Anspruch 1 oder 3, **dadurch gekennzeichnet, dass** auf einen Wechsel mindestens eines Reifens geschlossen wird, wenn eine Änderung des Verhältniswertes (Vi) mindestens zweier Reifen oberhalb einer Schwelle liegt.

5. Verfahren nach einem der Ansprüche 1, 3 oder 4 bis 5, **dadurch gekennzeichnet, dass** ein erster Verhältniswert vor Ausschalten des Fahrzeugs oder eines das Fahrzeug ziehenden Zugfahrzeugs und/oder bei Stillstand des Fahrzeugs gespeichert und mit einem nach Einschalten des Fahrzeugs oder eines das Fahrzeug ziehenden Zugfahrzeugs und/oder nach Weiterfahrt des Fahrzeugs ermittelten zweiten Verhältniswert verglichen wird und aus dem Vergleich bewertet wird, ob zwischen der Ermittlung des ersten und zweiten Verhältniswertes ein Wechsel eines der Reifen vorliegt.

6. Verfahren nach einem der vorherigen Ansprüche, **dadurch gekennzeichnet, dass** weiterhin Reifenluftdruck-Signale des Rades (2-1, 2-2, 2-3, 2-4) aufgenommen werden und bei der Ermittlung von Änderungen des Reifens eine Veränderung eines Radius des Reifens durch Änderungen des Reifenluftdrucks berücksichtigt werden.

7. Verfahren nach einem der vorherigen Ansprüche, **dadurch gekennzeichnet, dass** zu mehreren Rädern (2-1, 2-2, 2-3, 2-4), insbesondere allen Rädern des Fahrzeugs (1) jeweils eine für das Rad individuelle Vergleichsgröße gebildet und mit der Referenz-Wegstrecke verglichen wird, wobei für jedes der mehreren Räder (2-1, 2-2, 2-3, 2-4) jeweils ein Verhältniswert gebildet und dessen zeitliches Verhalten überprüft wird.

8. Verfahren nach Anspruch 7, **dadurch gekennzeichnet, dass** weiterhin die Verhältniswerte der einzelnen Räder und/oder die Vergleichsgrößen der einzelnen Räder miteinander verglichen werden.

9. Verfahren nach einem der vorherigen Ansprüche, **dadurch gekennzeichnet, dass** die Referenz-Wegstrecke aus einem Globalen Positionsbestimmungssystem und/oder aus einem von einer Radwelle und/oder dem Antriebsstrang ermittelten Drehzahl im Fahrzeug, z. B. einer Tachografen-Geschwindigkeit, und/oder aus einer von einem Zugfahrzeug übermittelten Fahrzeuggeschwindigkeit ermittelt wird.

10. Steuereinrichtung (6) für ein Fahrzeug (1), wobei die Steuereinrichtung (6) Radsensorsignale (S1-i) mindestens eines Rades (2-1, 2-2, 2-3, 2-4) des Fahrzeugs (1) über eine Zeitdauer (t1) aufnimmt und hieraus eine Vergleichsgröße (y1, y2, y3, y4) zur Angabe einer Rad-Wegstrecke (x1, x2, x3, x4) des Rades ermittelt

wobei die Steuereinrichtung (6) eine von dem Fahrzeug in der Zeitdauer (t1) zurückgelegte Referenz-Wegstrecke (RS) unabhängig von den Radsensor-Signalen (S1-1, S1-2, S1-3, S1-4) ermittelt und aus der Rad-Wegstrecke (x1, x2, x3, x4) und der Referenz- Wegstrecke (RS) einen individuellen Verhältniswert (2-1, 2-2, 2-3, 2-4) des Rades (2-1, 2-2, 2-3, 2-4 bildet, und das zeitliche Verhalten des Verhältniswertes überprüft (St5) und aus dem zeitlichen Verhalten auf Änderungen des Reifens des Rades schließt, **dadurch gekennzeichnet, dass** die Steuereinrichtung (6) aus dem zeitlichen Verhalten des Verhältniswertes (2-1, 2-2, 2-3, 2-4) darauf schließt, ob ein Wechsel des Reifens vorliegt.

11. Steuereinrichtung (6) nach Anspruch 10, **dadurch gekennzeichnet, dass** sie eine Steuereinrichtung (6) eines Bremsregelsystems und/oder Fahrdynamiksystems (5) ist.

## Claims

1. Method for checking vehicle tires, with which wheel sensor signals (S1-1, S1-2, S1-3, S1-4) of at least one wheel (2-1, 2-2, 2-3, 2-4) of the vehicle (1) are received (St1) over a period of time (t1) and a comparison variable (y1, y2, y3, y4) for indicating a wheel distance (x1, x2, x3, x4) of the wheel is determined therefrom (St2),

a reference distance (RS) covered by the vehicle in the period of time (t1) is determined (St3) independently of the wheel sensor signals (S1-1, S1-2, S1-3, S1-4),

an individual ratio value (2-1, 2-2, 2-3, 2-4) of the wheel (2-1, 2-2, 2-3, 2-4) is formed (St4) from the wheel distance (x1, x2, x3, x4) and the reference distance (RS),

the behavior of the ratio value against time is checked (St5) and conclusions drawn (St6) regarding changes of the tire of the wheel from the behavior against time, **characterized in that** it is concluded whether there is a change of the tire from the behavior of the ratio value (2-1, 2-2, 2-3, 2-4) against time.

2. Method according to Claim 1, **characterized in that** in the event of a reduction of an individual wheel distance (x1, x2, x3, x4) of a wheel (2-1, 2-2, 2-3, 2-4) relative to the reference distance a conclusion is drawn regarding a reduction of the radius of the tire (9-1, 9-2, 9-3, 9-4).

3. Method according to Claim 1, **characterized in that** a change of the tire is concluded if a change of the ratio value (Vi) of the tire is above a threshold.

4. Method according to Claim 1 or 3, **characterized in that** a change of at least one tire is concluded if a change of the ratio value (Vi) of at least two tires is above a threshold.

5. Method according to any one of the Claims 1, 3 or 4, **characterized in that** a first ratio value is stored before switching off the vehicle or a towing vehicle that is towing the vehicle and/or if the vehicle is stationary and is compared with a second ratio value that is determined after switching on the vehicle or a towing vehicle that is towing the vehicle and/or after further travel by the vehicle and an assessment is made from the comparison as to whether there is a change of one of the tires between determining the first and second ratio values.

6. Method according to any one of the preceding claims, **characterized in that** furthermore tire air pressure signals of the wheel (2-1, 2-2, 2-3, 2-4) are recorded and on detecting changes of the tire a change of a radius of the tire resulting from changes of the tire air pressure is taken into account.

7. Method according to any one of the preceding claims, **characterized in that** for a plurality of wheels (2-1, 2-2, 2-3, 2-4), especially all wheels of the vehicle (1), an individual comparison variable is formed for each wheel and is compared with the reference distance, wherein a ratio value is formed for each of the plurality of wheels (2-1, 2-2, 2-3, 2-4) and its behavior against time is checked.

8. Method according to Claim 7, **characterized in that** furthermore the ratio values of the individual wheels and/or the comparison variables of the individual wheels are compared with each other.

9. Method according to any one of the preceding claims, **characterized in that** the reference distance is determined from a global position determination system and/or from a revolution rate in the vehicle that is determined from a wheel shaft and/or the drive train, e.g. a tachograph speed, and/or from a vehicle speed transmitted from a towing vehicle.

10. Control device (6) for a vehicle (1),
wherein the control device (6) receives wheel sensor signals (S1-i) of at least one wheel (2-1, 2-2, 2-3, 2-4) of the vehicle (1) over a period of time (t1) and determines therefrom a comparison variable (y1, y2, y3, y4) for indicating a wheel distance (x1, x2, x3, x4) of the wheel,
wherein the control device (6) determines a reference distance (RS) covered by the vehicle in the period of time (t1) independently of the wheel sensor signals (S1-1, S1-2, S1-3, S1-4) and forms an individual ratio value (2-1, 2-2, 2-3, 2-4) of the wheel (2-1, 2-2, 2-3, 2-4) from the wheel distance (x1, x2, x3, x4) and the reference distance (RS) and checks the behavior against time of the ratio value (St5) and draws a conclusion regarding changes of the tire of the wheel from the behavior against time, **characterized in that** the control device (6) concludes whether there is a change of the tire from the behavior of the ratio value (2-1, 2-2, 2-3, 2-4) against time.

11. Control device (6) according to Claim 10, **characterized in that** it is a control device (6) of a brake control system and/or driving dynamics system (5).

**Revendications**

1. Procédé de vérification de pneumatiques de véhicule, dans lequel des signaux de capteurs de roues (S1-1, S1-2, S1-3, S1-4) d'au moins une roue (2-1, 2-2, 2-3, 2-4) du véhicule (1) sont captés (St1) pendant une durée (t1) et il en est déduit une grandeur comparative (St2) pour la spécification d'un trajet de roue (x1, x2, x3, x4) de la roue (y1, y2, y3, y4),
un trajet de référence (RS) parcouru pendant la durée (t1) par le véhicule est déterminé (St3) indépendamment des signaux de capteurs de roues (S1-1, S1-2, S1-3, S1-4),
une valeur de rapport individuelle (2-1, 2-2, 2-3, 2-4) de la roue (2-1, 2-2, 2-3, 2-4) est calculée (St4) à partir du trajet de roue (x1, x2, x3, x4) et du trajet de référence (RS),
le comportement dans le temps de la valeur de rapport est vérifié (St5) et, à partir du comportement dans le temps, il est conclu (St6) qu'il se produit des modifications du pneumatique de la roue, **caractérisé en ce que** le comportement dans le temps de la valeur de rapport (2-1, 2-2, 2-3, 2-4) permet de conclure qu'un changement du pneumatique est nécessaire.

2. Procédé selon la revendication 1, **caractérisé en ce qu'**il est conclu qu'une réduction du rayon du pneumatique (9-1, 9-2, 9-3, 9-4) s'est produite lors d'une réduction d'un trajet de roue individuel (x1, x2, x3, x4) d'une roue (2-1, 2-2, 2-3, 2-4) par rapport au trajet de référence.

3. Procédé selon la revendication 1, **caractérisé en ce qu'**il est conclu qu'un changement du pneumatique est nécessaire lorsqu'une variation de la valeur de rapport (Vi) du pneumatique est supérieure à un seuil.

4. Procédé selon la revendication 1 ou 3, **caractérisé en ce qu'**il est conclu qu'un changement d'au moins un pneumatique est nécessaire lorsqu'une variation de la valeur de rapport (Vi) d'au moins deux pneumatiques est supérieure à un seuil.

5. Procédé selon l'une des revendications 1, 3 ou 4 à 5, **caractérisé en ce qu'**une première valeur de rapport est stockée avant que le véhicule ou qu'un véhicule tracteur tirant le véhicule soit arrêté et/ou lorsque le véhicule est à l'arrêt et est comparée à une seconde valeur de rapport déterminée après la mise en route du véhicule ou d'un véhicule tracteur tirant le véhicule et/ou après que le véhicule ait redémarré, et il est évalué, d'après cette comparaison, si un changement de l'un des pneumatiques est nécessaire entre les déterminations des première et seconde valeurs de rapport.

6. Procédé selon l'une des revendications précédentes, **caractérisé en ce que** des signaux de pression d'air du pneumatique de la roue (2-1, 2-2, 2-3, 2-4) sont en outre captés et, lors de la détermination de modifications du pneumatique, une modification d'un rayon du pneumatique par modifications de pression du pneumatique est prise en compte par des modifications de la pression d'air du pneumatique.

7. Procédé selon l'une des revendications précédentes, **caractérisé en ce qu'**une grandeur de comparaison individuelle pour la roue est respectivement calculée pour une pluralité de roues (2-1, 2-2, 2-3, 2-4), en particulier pour toutes les roues du véhicule (1), et est comparée au trajet de référence, dans lequel une valeur de rapport est calculée pour chacune de la pluralité de roues (2-1, 2-2, 2-3, 2-4) et son comportement dans le temps est vérifié.

8. Procédé selon la revendication 7, **caractérisé en ce que** les valeurs de rapport des différentes roues et/ou les valeurs comparatives des différentes roues sont en outre comparées les unes aux autres.

9. Procédé selon l'une des revendications précédentes, **caractérisé en ce que** le trajet de référence est déterminé à partir d'un système global de détermination de position et/ou à partir d'une vitesse de rotation déterminée dans le véhicule d'un arbre de roue et/ou de la chaîne cinématique, par exemple une vitesse de tachygraphe, et/ou à partir d'une vitesse du véhicule transmise par un véhicule tracteur.

10. Dispositif de commande (6) pour un véhicule (1), dans lequel le dispositif de commande (6) capte des signaux de capteurs de roues (S1-i) d'au moins une roue (2-1, 2-2, 2-3, 2-4) du véhicule (1) pendant une durée (t1) et en déduit une grandeur comparative (y1, y2, y3, y4) pour la spécification d'un trajet de roue (x1, x2, x3, x4) de la roue,
dans lequel le dispositif de commande (6) détermine un trajet de référence (RS) parcouru pendant la durée (t1) par le véhicule indépendamment des signaux de capteurs de roues (S1-1, S1-2, S1-3, S1-4), et calcule une valeur de rapport individuelle (2-1, 2-2, 2-3, 2-4) de la roue (2-1, 2-2, 2-3, 2-4) à partir du trajet de roue (x1, x2, x3, x4) et du trajet de référence (RS), et vérifie (St5) le comportement dans le temps de la valeur de rapport et, à partir du comportement dans le temps, conclut qu'il se produit des modifications du pneumatique de la roue, **caractérisé en ce que** le dispositif de commande (6) conclut à partir du comportement dans le temps de la valeur de rapport (2-1, 2-2, 2-3, 2-4) qu'un changement du pneumatique est nécessaire.

11. Dispositif de commande (6) selon la revendication 10, **caractérisé en ce qu'**il s'agit d'un dispositif de commande (6) d'un système de commande de freinage et/ou d'un système dynamique de conduite (5).

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2326007 A

- US 20100180677 A1